# EUROPEAN PATENT APPLICATION

(11) **EP 2 012 508 A1**
(43) Date of publication of application: **07.01.2009**
(21) Application number: 08157195.2
(22) Date of filing: 29.05.2008
(51) Int. Cl.: H04M 1/15, H04M 1/60, H02G 11/00

(54) **Wi-fi phone with hands-free feature**

(30) Priority: 02.07.2007 DE 202007009271 U
(71) Applicant: Lin, Pi-Fen, Taipei City 106 (TW)
(72) Inventor: Lin, Pi-Fen, Taipei City 106 (TW)
(74) Representative: Viering, Jentschura & Partner

(57) **Abstract**

The present invention discloses a Wi-Fi phone with a hands free feature, wherein the Wi-Fi phone connects with a wireless network to provide VoIP communication. The Wi-Fi phone integrates an earphone (100) into a hands-free Wi-Fi phone, wherein the earphone can be extended or retracted (1014). Furthermore, the Wi-Fi phone of the present also integrates a Bluetooth headset (32) into a hands-free Wi-Fi phone.

## Description

### BACKGROUND OF THE INVENTION

### 1. Field of the invention

The present invention relates to a Wi-Fi phone with a hands-free feature, and more specifically to a Wi-Fi phone with a wired earphone hands-free feature or a Bluetooth earphone hands-free feature, in which the Wi-Fi phone communicates wirelessly via a wireless network.

### 2. Description of the prior art

Along with developments in wireless techniques and the popularization of the Internet, wireless networks are becoming increasingly common. Because wireless networks densely cover people's daily lives, people can get on the Internet anytime and anywhere via notebook computers or mobile phones.

Moreover, along with the popularization of wireless networks, network communications have developed from the simple BBS (bulletin board system), E-mail to subsequent real-time communications such as ICQ and MSN Chat, etc. VoIP (Voice over Internet Protocol) is also gradually becoming popular because the frequency ranges of networks are continually increasing. WAP phones are implemented via network communication software and wirelessly connect with a host computer in a network, thereby providing the VoIP service.

However, when users communicate via WAP phones, they need to hold the phones close to their ears to hear incoming sounds. If they are involved in a long call or use the phone for extended periods, the user's arm can start to ache. Traffic accidents can also occur while driving because the user cannot use both of their hands when responding to a hazard. Moreover, in the process of performing wireless network communications, calling, browsing the Internet, and receiving network data can't be done at the same time. Hence, communication quality is reduced.

Hence, the inventors of the present invention believe that these shortcomings described above are able to be improved upon and suggest the present invention which is of a reasonable design and is an effective improvement based on deep research and thought.

### SUMMARY OF THE INVENTION

An object of the present invention is to provide a Wi-Fi phone with a hands-free feature, the Wi-Fi phone communicates via a wireless network and has a hands-free function. The hands-free function is implemented via a wired earphone or a Bluetooth earphone. Moreover, by using the wired earphone and the Bluetooth earphone, users can talk, view the Internet, or receive network data synchronously via a display, which improves communication quality.

The Wi-Fi phone with a hands-free feature of the first embodiment of the present invention comprises a controlling module, a Wi-Fi phone module, an audio codec, a microphone, an audio switching module, a speaker, a wire receiving unit, an earphone, and a judging unit.

Wherein the Wi-Fi phone module connects with the controlling module and a wireless network to provide VoIP service. The audio codec connects with the controlling module and transforms analog signals and digital signals. The microphone connects with the audio codec. The audio switching module connects with the audio codec and switches audio outputting routes. The speaker connects with the audio switching module and outputs audio signals according to the actions of the audio switching module. The wire receiving unit comprises a communication cable, which can be extended and retracted. One end of the communication cable connects with the audio switching module. The other end of the communication cable connects with the earphone. The earphone outputs audio signals according to the action of the audio switching module. The judging unit connects with the audio switching module and the wire receiving unit and controls the switching action of the audio switching module according to the extension and the retraction of the communication cable.

The Wi-Fi phone with a hands-free feature of the second embodiment of the present invention comprises a Bluetooth earphone and a telephone body. The Bluetooth earphone comprises a signal transmitting end. The telephone body comprises an earphone containing groove and a controlling circuit board. The earphone containing groove contains the Bluetooth earphone. The signal transmitting end of the Bluetooth earphone connects electronically with the controlling circuit board.

The controlling circuit board comprises a controlling module, a Bluetooth module, a Wi-Fi phone module, an audio codec, a judging and charging circuit, an audio switching module, a speaker, a microphone, and an echo cancellation circuit.

The Bluetooth module connects with the controlling module and wirelessly communicates audio signals with the Bluetooth earphone. The Wi-Fi phone module connects with the controlling module and a wireless network to provide VoIP service. The audio codec connects with the controlling module and transforms analog signals and digital signals. The judging and charging circuit connects with the controlling module and judges whether the earphone containing groove contains the Bluetooth earphone. When the Bluetooth earphone is contained in the earphone containing groove, the judging and charging circuit will charge the Bluetooth earphone. The audio switching module connects with the controlling module, the Bluetooth module, and the audio codec. The audio switching module is controlled by the controlling module and switches audio outputting routes. The echo cancellation circuit connects with the audio switching module, the speaker, and the microphone. The echo cancellation circuit cancels the echo produced as the speaker and the microphone operate.

The Wi-Fi phones of the first embodiment and the second embodiment of the present invention have a hands-free function, which is implemented via the wired earphone mode and the Bluetooth mode respectively. Hence, when users use WAP phones, their arms ache, and when driving, traffic accidents are less likely to occur.

To further understand the features and technical contents of the present invention, please refer to the following detailed description and drawings related to the present invention. However, the drawings are only to be used as references and explanations, and not to limit the present invention.

### BRIEF DESCRIPTION OF THE DRAWINGS

Fig. 1 is a communication view of a first embodiment of the present invention;
Fig. 2 is a view of the present invention in use of a first embodiment of the present invention;
Fig. 3 is a circuit block diagram of a telephone body of a first embodiment of the present invention;
Fig. 4 is an isometric view of a wire receiving unit of a first embodiment of the present invention;
Fig. 5 is a circuit diagram of a judging unit and an audio switching module of a first embodiment of the present invention;
Fig. 6 is a communication view of a second embodiment of the present invention;
Fig. 7 is a view of the present invention in use of a second embodiment of the present invention;
Fig. 8 is a circuit block diagram of a telephone body of a second embodiment of the present invention;

### DETAILED DESCRIPTION OF THE INVENTION

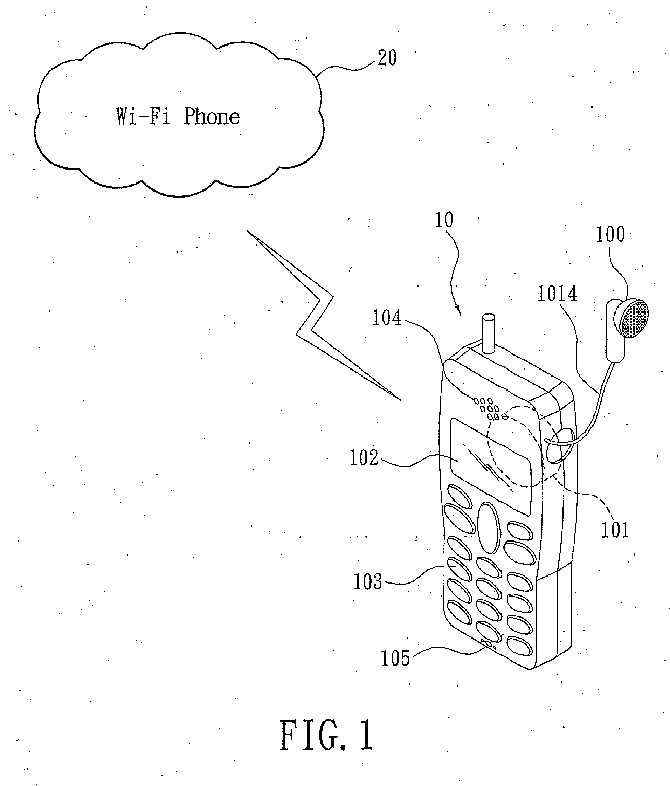

Please refer to Fig. 1 in which a communication view of a first embodiment of the present invention is shown. A Wi-Fi phone 10 with a hands-free feature can connect with a wireless network 20 and implement VoIP via the wireless network 20. A keystroke module 103 is used to dial a number, receive calls, or implement other network telephone functions. Each function is viewed via a display 102. When the Wi-Fi phone 10 is in use, users can hear incoming sounds via a speaker 104, and talk via a microphone 105. Hence, a network telephone communication is setup.

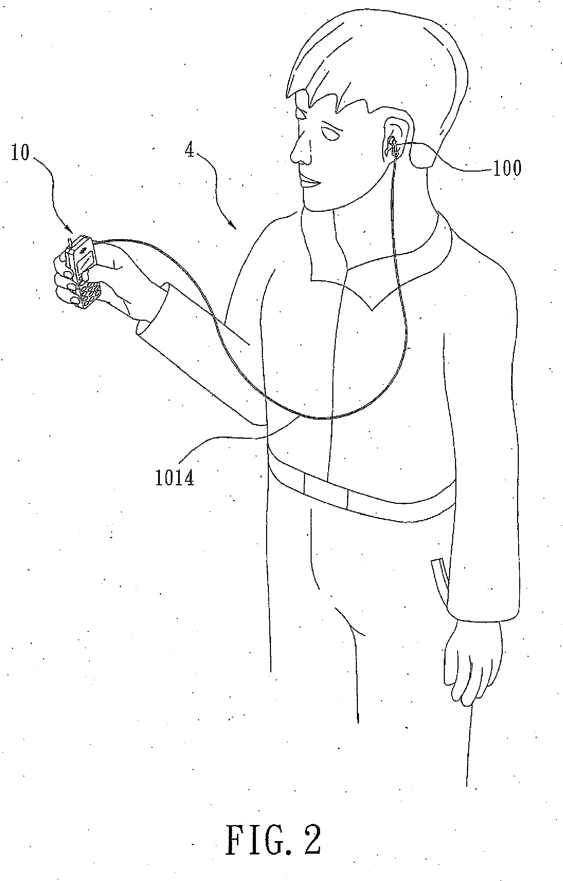

Please refer to Fig. 2, a view of the present invention in use of a first embodiment of the present invention is shown. A user 4 can turn on the Wi-Fi phone 10 of the present invention to link the Wi-Fi phone 10 with the wireless network 20. When there is an incoming call, the user 4 can hold the Wi-Fi phone 10 with his or her hand putting the Wi-Fi phone 10 close to his or her ear so as to talk. Moreover, the user 4 can extend a communication cable 1014 of a wire receiving unit 101 of the Wi-Fi phone 10, and then attach an earphone 100 set on the communication cable 1014 near his or her ear. Hence, by attaching with the microphone 105, an earphone hands-free mode is setup. The user 4 can also talk, view or receive network data synchronously via the earphone hands-free mode, which improves communication quality.

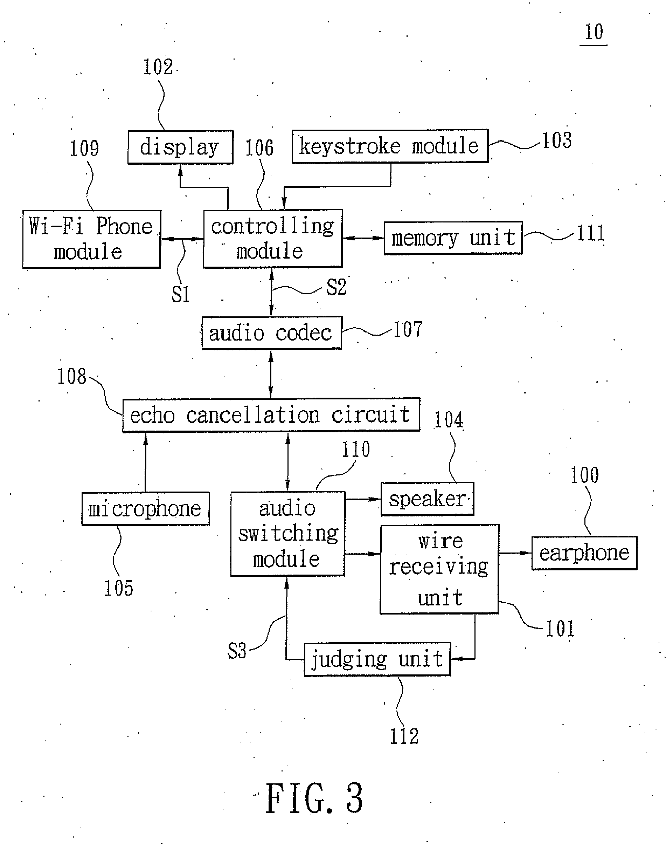

Please refer to Fig. 3 in which a circuit block diagram of a telephone body of a first embodiment of the present invention is shown. The Wi-Fi phone 10 of the present invention includes a controlling module 106, a Wi-Fi phone module 109, an audio codec 107, an echo cancellation circuit 108, the microphone 105, an audio switching module 110, the speaker 104, the wire receiving unit 101, the earphone 100, a memory unit 111, and a judging unit 112.

The Wi-Fi phone module 109 connects with the controlling module 106 and the wireless network 20 to provide WAP phone communication services. The audio codec 107 connects with the controlling module 106 and transforms analog signals and digital signals. The microphone 105 connects with the audio codec 107. The audio switching module 110 connects with the audio codec 107 and switches audio outputting routes. The speaker 104 connects with the audio switching module 110 and outputs audio signals according to the switch of the audio switching module 110. The wire receiving unit 101 includes a communication cable, which can be extended or retracted. One end of the communication cable connects with the audio switching module 110, the other end of the communication cable connects with the earphone 100. The earphone 100 outputs audio signals according to the switch of the audio switching module 110. The judging unit 112 connects with the audio switching module 110 and the wire receiving unit 101 and controls the switch of the audio switching module 110 according to the extension or retracting of the communication cable.

The controlling module 106 implements a network communication software (such as Skype) stored in the memory unit 111. The controlling module 106 controls the Wi-Fi phone module 109 to receive an incoming package signal S1 from the wireless network 20 via wireless communication techniques. Then, the controlling module 106 handles the incoming package signal S1 to output an audio signal S2 to the audio codec 107. The audio codec 107 decodes the audio signal S2 to transform the audio signal S2 from a digital state into an analog state.

Users can operate the keystroke module 103 connected with the controlling module 106 to provide phone numbers and other function instructions to the controlling module 106. Hence, functions such as dialing, receiving a call, or other WAP phone functions can be implemented. These functions can be viewed via the display 102 connected with the controlling module 106.

The audio switching module 110 connects with the judging unit 112 and the audio codec 107 via the echo cancellation circuit 108. The audio switching module 110 receives the analog audio signal S2 and is controlled by the judging unit 112 to switch the transmitting routes of the audio signal S2. Moreover, the audio switching module 110 connects with the speaker 104 and the wire receiving unit 101. The speaker 104 amplifies the outputted audio. The wire receiving unit 101 connects with the earphone 100. The earphone 100 can be extended or retracted in the wire receiving unit 101.

According to the extension or retraction of the earphone 100 within the wire receiving unit 101, the judging unit 112 outputs a judging signal S3 with a high potential or a low potential to the audio switching module 110. Next, the judging unit 112 controls the switch of the transmitting routes of the audio signal S2. The audio signal S2 can be transmitted to the speaker 104 or the earphone 100. The low potential judging signal S3 controls the audio switching module 110 to transmit the audio signal S2 to the speaker 104. The audio signal S2 is amplified and outputted. Via the microphone 105 connected with the echo cancellation circuit 108, users can speak on the phone. The high potential judging signal S3 controls the audio switching module 110 to transmit the audio signal S2 to the earphone 100. Via the microphone 105 connected with the echo cancellation circuit 108, users can speak on the phone. The echo cancellation circuit 108 cancels echoes produced when the speaker 104 and the microphone 105 operate.

Moreover, the judging signal S3 with a high potential or a low potential is used to control the switching methods of the audio signal transmitting routes, which is an embodiment of the present invention. If other methods can achieve the same efficacy as the embodiment, such methods belong to the scope of the present invention.

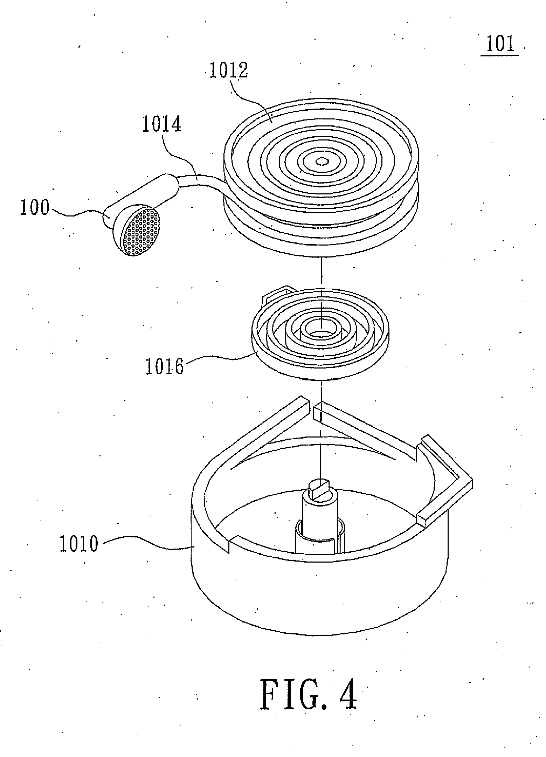

Please refer to Fig. 4 in which an isometric view of a wire receiving unit of a first embodiment of the present invention is shown. The wire receiving unit 101 includes a wire channel 1010, a drum 1012, a communication cable 1014, and a spiral spring 1016. The drum 1012 and the spiral spring 1016 are pivotally disposed in the wire channel 1010. The communication cable 1014 winds around the drum 1012. The drum 1012 can rotate. The communication cable 1014 can be extended or retracted via the rotation of the spiral spring 1016 and the drum 1012. One end of the communication cable 1014 connects with the audio switching module 110. The other end of the communication cable 1014 connects with the earphone 100.

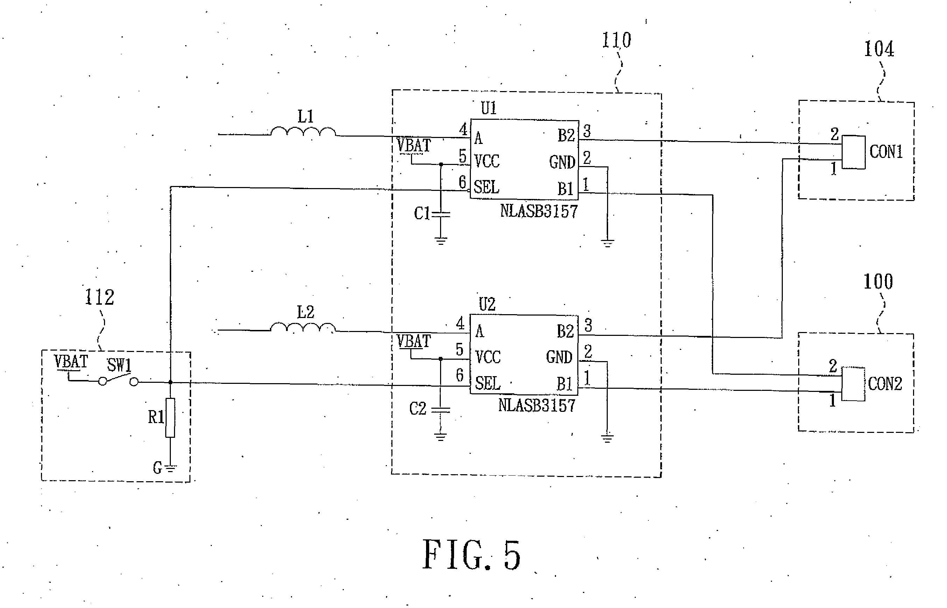

Please refer to Fig. 5 in which a circuit diagram of a judging unit and an audio switching module of a first embodiment of the present invention is shown. The judging unit 112 includes a pothook switch SW1. One end of the pothook switch SW1 connects with a high potential signal source VBAT. The other end of the pothook switch SW1 connects with a low potential signal source G and the audio switching module 110 via a resistance R1. The pothook switch SW1 switches according to the extension and retraction of the communication cable 1014, then provides the high potential judging signal or the low potential judging signal S3 to the audio switching module 110 to control the switch and the output of the audio signal S2.

When the Wi-Fi phone 10 receives a call, if the user 4 selects hand-held mode, the wire receiving unit 101 is retracted, and the pothook switch SW1 is in the open state (OFF). The low potential signal source G provides the low potential judging signal S3 to the audio switching module 110 via the resistance R1. The audio signal S2 is transmitted to the speaker 104 via an inductance L1 and a controlling chip U1. A model number of the controlling chip U1 is NLASB3157.

In summary, the Wi-Fi phone 10 of the first embodiment of the present invention provides the earphone hands-free mode. When the user 4 uses the mobile phone Wi-Fi phone 10, the arm of the user 4 won't ache, and when driving, traffic accidents are less likely to occur. The Wi-Fi phone 10 of the present invention is convenient, increases communication quality and meets user's communication needs.

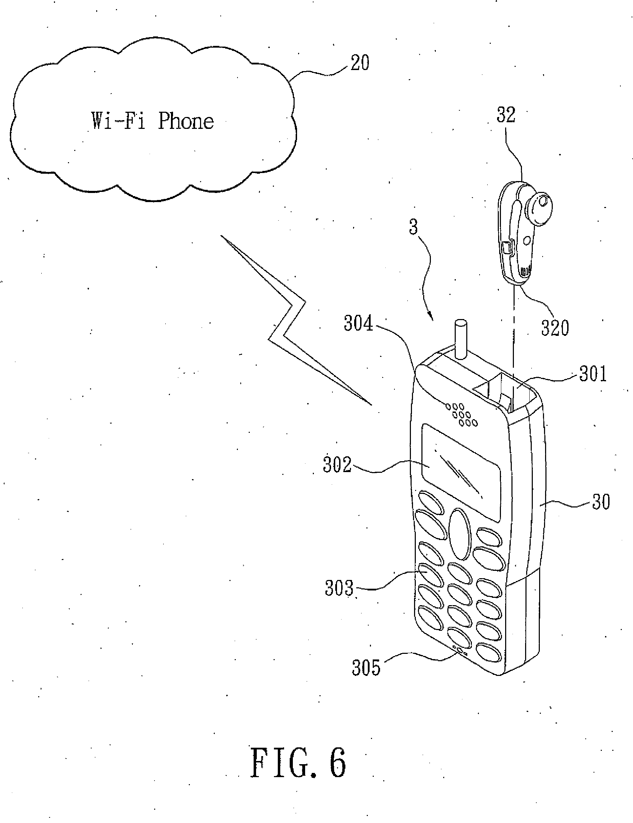

Please refer to Fig. 6 in which a communication view of a second embodiment of the present invention is shown. A Wi-Fi phone 3 with a hands-free feature can connect with a wireless network 20 and implements VoIP via the wireless network 20. The Wi-Fi phone 3 includes a Bluetooth earphone 32 and a telephone body 30. The Bluetooth earphone 32 includes a signal transmitting end 320. The telephone body 30 includes an earphone containing groove 301 and a controlling circuit board (not shown). The earphone containing groove 301 can contain the Bluetooth earphone 32. Hence, the signal transmitting end 320 of the Bluetooth earphone 32 can be connected electronically with the controlling circuit board.

A keystroke module 103 is set on the telephone body 30. Users can operate the keystroke module 103 to dial a number, receive calls, or implement other WAP phone functions. Each function can be viewed via a display 302 disposed on the telephone body 30. When the Wi-Fi phone 3 is in use, the user 4 can hear incoming sounds via a speaker 304, and talk back via a microphone 305. Hence, communication via a network telephone is setup. Alternatively, hands-free communication using the Wi-Fi phone 3 is carried out by the Bluetooth earphone 32.

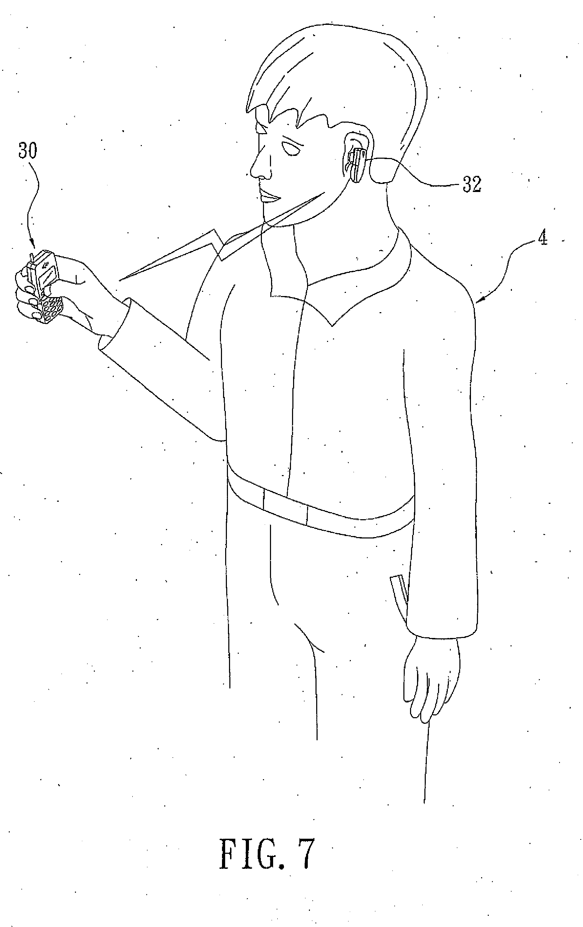

Please refer to Fig. 7 in which a view of the present invention in use of a second embodiment of the present invention is shown. A user 4 can turn on the Wi-Fi phone 3 of the present invention and make the Wi-Fi phone 10 link with the wireless network 20. When there is an incoming call, the user 4 can hold the Wi-Fi phone 3 with his or her hand so that the device is close to his or her ear. Moreover, the user 4 can remove the Bluetooth earphone 32 from the Wi-Fi phone 3 and put the Bluetooth earphone 32 into his or her ear to implement the hands-free mode. Hence, by implementing the hands-free mode, the user 4 can talk, view or receive network data synchronously, thereby improving communication quality.

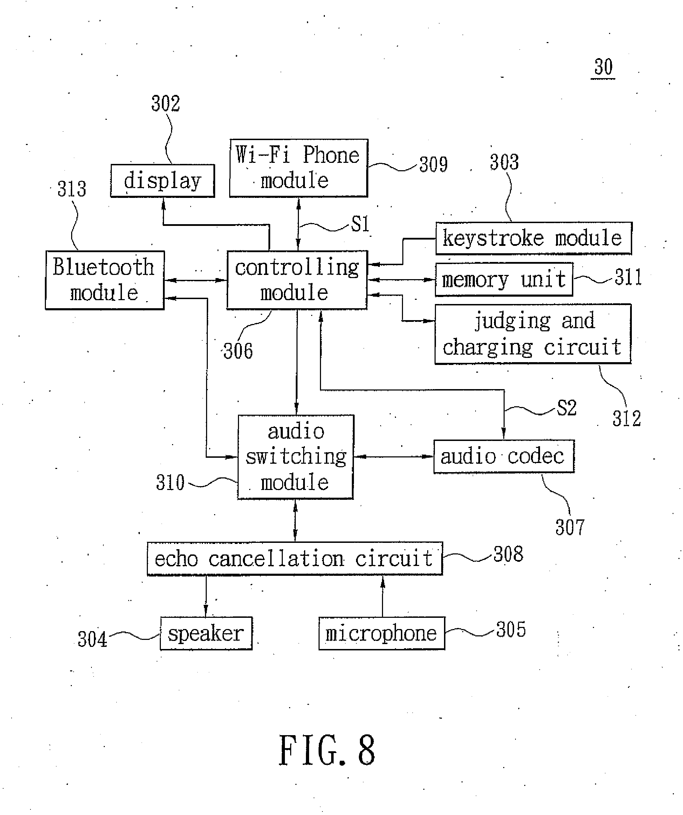

Please refer to Fig. 8 in which a circuit block diagram of a telephone body of a second embodiment of the present invention is shown. The controlling circuit board of the telephone body 30 of the present invention includes a controlling module 306, a Wi-Fi phone module 309, an audio codec 307, an echo cancellation circuit 308, the microphone 305, an audio switching module 310, the speaker 304, a memory unit 311, a judging and charging circuit 312, and a Bluetooth module 313.

The Bluetooth module 313 connects with the controlling module 306 and is controlled by controlling module 306. The Bluetooth module 313 wirelessly transmits audio signals to the Bluetooth earphone 32. The Wi-Fi phone module 309 connects with the controlling module 306 and the wireless network 20 to provide communication services. The audio codec 307 connects with the controlling module 306 and transforms analog and digital signals. The judging and charging circuit 312 connects with the controlling module 306 to judge whether the earphone containing groove 301 contains the Bluetooth earphone 32. Accordingly, if the signal transmitting end 320 of the Bluetooth earphone 32 is connected electronically with the judging and charging circuit 312, the judging and charging circuit 312 determines that the Bluetooth earphone 32 is contained in the earphone containing groove 301. When the Bluetooth earphone 32 is contained in the earphone containing groove 301, the judging and charging circuit 312 will charge the Bluetooth earphone 32. The audio switching module 310 connects with the controlling module 306, the Bluetooth module 313, and the audio codec 307. The audio switching module 310 is controlled by the controlling module 306 and switches audio transmitting routes. The echo cancellation circuit 308 connects with the audio switching module 310, the speaker 304, and the microphone 305. The echo cancellation circuit 308 can cancel echoes produced as the speaker 304 and the microphone 305 work.

The controlling module 306 implements a network communication software (such as Skype) stored in the memory unit 311. The controlling module 306 controls the Wi-Fi phone module 309 to receive the incoming package signal S1 from the wireless network 20 via wireless communication techniques. Then, the controlling module 306 handles the incoming package signal S1 to output the audio signal S2 to the audio codec 307. The audio codec 307 decodes the audio signal S2 to transform the audio signal S2 from the digital state into the analog state.

The judging and charging circuit 312 sends out an instruction to the controlling module 306 to tell the controlling module 306 whether the Bluetooth earphone 32 has separated from the telephone body 30. When the Bluetooth earphone 32 is disposed in the telephone body 30, the controlling module 306 controls the audio switching module 310 to switch the audio transferring route. Hence, an audio transferring route between the audio codec 307 and the speaker 304 and an audio transferring route between the audio codec 307 and the microphone 305 are set up. At the same time, the judging and charging circuit 312 charges the Bluetooth earphone 32 contained in the telephone body 30. The audio switching module 310 connects with the speaker 304 and the microphone 305 via the echo cancellation circuit 308. The echo cancellation circuit 308 can cancel echoes produced as the speaker 304 and the microphone 305 work.

When the controlling module 306 receives the signal that the Bluetooth earphone 32 has separated from the telephone body 30, the controlling module 306 controls the audio switching module 310 to switch the audio transferring route. Hence, the audio transferring route between the audio codec 307 and the microphone 305 are set up. The controlling module 306 controls the Bluetooth module 313 and the Bluetooth earphone 32 to wirelessly transmit the audio signals.

The user 4 operates a keystroke module 303 of the controlling module 306 to provide a phone number or other function instructions to the controlling module 306, thereby implementing functions such as dialing a number, receiving calls, or other WAP phone functions. Each function can be viewed via the display 302 of the controlling module 306.

In summary, the Wi-Fi phone with a hands-free feature of the present invention can implement VoIP via a wireless network. Moreover, the Wi-Fi phone with a hands-free feature of the present invention has a hands-free function which is implemented via a wired earphone mode or a Bluetooth mode. When the user 4 uses the mobile phone Wi-Fi phone 10, the arm of the user 4 won't ache, and when driving, traffic accidents are less likely to occur. The Wi-Fi phone 10 of the present invention is convenient and increases communication quality and meets users communication needs.

What is disclosed above are only the preferred embodiments of the present invention, and therefore it is intended that the present invention not be limited to the particular embodiment disclosed. It should be understood by those skilled in the art that various equivalent changes may be made depending on the specification and the drawings of present invention without departing from the scope of the present invention.

## Claims

1. A Wi-Fi phone with a hands-free feature, comprising:
a controlling module;
a Wi-Fi phone module connecting with the controlling module and a wireless network to provide VoIP service;
an audio codec connecting with the controlling module and transforming analog signals and digital signals;
a microphone connecting with the audio codec;
an audio switching module connecting with the audio codec and switching audio outputting routes;
a speaker connecting with the audio switching module and outputting audio signals according to the actions of the audio switching module;
a wire receiving unit comprising a communication cable, which can be extended or retracted, one end of the communication cable connecting with the audio switching module;
an earphone connecting with a second end of the communication cable and outputting audio signals according to the action of the audio switching module;
a judging unit connecting with the audio switching module and the wire receiving unit and controlling the switching action of the audio switching module according to the extension and the retraction of the communication cable.

2. The Wi-Fi phone with a hands-free feature as claimed in claim 1, further comprises an echo cancellation circuit, the echo cancellation circuit connects with the audio switching module, the speaker, and the microphone, the echo cancellation circuit cancels echoes produced as the speaker and the microphone work.

3. The Wi-Fi phone with a hands-free feature as claimed in claim 1, further comprises a display connecting with the controlling module.

4. The Wi-Fi phone with a hands-free feature as claimed in claim 1, further comprises a keystroke module connecting with the controlling module, the keystroke module provides phone numbers and function instructions to the controlling module.

5. The Wi-Fi phone with a hands-free feature as claimed in claim 1, further comprises a memory unit connecting with the controlling module, the memory unit stores a network communication software.

6. The Wi-Fi phone with a hands-free feature as claimed in claim 1, wherein the judging unit comprises a pothook switch, one end of the pothook switch connects with a high potential signal source, the other end of the pothook switch connects with a low potential signal source and the audio switching module, the pothook switch switches according to the extension and the retraction of the communication cable, then provides the high potential judging signal or the low potential judging signal to the audio switching module to control the switch and the outputting of the audio signal.

7. The Wi-Fi phone with a hands-free feature as claimed in claim 1, further comprises a wire channel, a drum, and a spiral spring, the drum and the spiral spring are pivotally disposed in the wire channel, the communication cable winds around the drum, the communication cable can be extended or retracted via the rotation of the spiral spring.

8. The Wi-Fi phone with a hands-free feature as claimed in claim 1, wherein the judging unit controls the audio switching module to switch the audio signals to the earphone to output according to the extension and the retraction of the judging unit, and controls the audio switching module to switch the audio signals to the speaker to output according to the retraction of the communication cable.

9. A Wi-Fi phone with a hands-free feature, comprising:
a Bluetooth earphone comprising a signal transmitting end;
a telephone body comprising an earphone containing groove and a controlling circuit board, the earphone containing groove containing the Bluetooth earphone, the signal transmitting end of the Bluetooth earphone connecting electronically with the controlling circuit board, the controlling circuit board comprising:
a controlling module;
a Bluetooth module connecting with the controlling module and wirelessly communicating audio signals with the Bluetooth earphone;
a Wi-Fi phone module connecting with the controlling module and a wireless network to provide VoIP service;
an audio codec connecting with the controlling module and transforming analog signals and digital signals;
a judging and charging circuit connecting with the controlling module and judging whether the earphone containing groove contains the Bluetooth earphone, when the Bluetooth earphone is contained in the earphone containing groove, the judging and charging circuit charges the Bluetooth earphone;
an audio switching module connecting with the controlling module, the Bluetooth module, and the audio codec, the audio switching module is controlled by the controlling module and switching audio outputting routes;
a speaker;
a microphone; and
an echo cancellation circuit connecting with the audio switching module, the speaker, and the microphone, the echo cancellation circuit cancels echoes produced as the speaker and the microphone work.

10. The Wi-Fi phone with a hands-free feature as claimed in claim 9, further comprises a display connecting with the controlling module.

11. The Wi-Fi phone with a hands-free feature as claimed in claim 9, further comprises a keystroke module connecting with the controlling module, the keystroke module provides phone numbers and function instructions to the controlling module.

12. The Wi-Fi phone with a hands-free feature as claimed in claim 9, further comprises a memory unit connecting with the controlling module, the memory unit stores a network communication software.

13. The Wi-Fi phone with a hands-free feature as claimed in claim 9, wherein when the Bluetooth earphone is disposed in the earphone containing groove, the audio switching module switches audio signals to the speaker to output, and when the Bluetooth earphone is separated from the earphone containing groove, the audio switching module switches audio signals to the Bluetooth earphone to output.
